# EUROPÄISCHE PATENTSCHRIFT

(11) **EP 4 354 010 B1**
(45) Veröffentlichungstag und Bekanntmachung des Hinweises auf die Patenterteilung: **15.01.2025**
(21) Anmeldenummer: 23184039.8
(22) Anmeldetag: 07.07.2023
(51) Int. Cl.: F16P 3/14

(54) **ÜBERWACHUNGSEINRICHTUNG**
MONITORING DEVICE
DISPOSITIF DE SURVEILLANCE

(30) Priorität: 28.09.2022 DE 202022105448 U
(43) Veröffentlichungstag der Anmeldung: 17.04.2024
(73) Patentinhaber: Leuze electronic GmbH + Co. KG, 73277 Owen/Teck (DE)
(72) Erfinder: Eder, Alexander, 86928 Hofstetten (DE); Schmidinger, Kristian, 73278 Schlierbach (DE); Späth, Kai, 73265 Dettingen/Teck (DE)
(74) Vertreter: Ruckh, Rainer Gerhard

(56) Entgegenhaltungen:
- EP-A2- 1 329 662
- EP-A2- 2 306 063
- DE-A1- 102007 040 692
- DE-U1- 20 103 828

## Beschreibung

Die Erfindung betrifft eine Überwachungseinrichtung

Eine derartige Überwachungseinrichtung umfasst einen Sicherheitssensor, mittels dessen Objekte innerhalb eines Schutzfelds erfasst werden.

Derartige Überwachungseinrichtungen werden allgemein im Bereich der Sicherheitstechnik, insbesondere im Bereich des Personenschutzes eingesetzt. Typischerweise wird dabei mit dem Sicherheitssensor der Zugang zu einem Gefahrenbereich an einer Anlage überwacht.

Ein für derartige Überwachungsaufgaben eingesetzter Sicherheitssensor in Form eines Lichtgitters ist aus der DE 299 20 715 U1 bekannt. Das Lichtgitter umfasst eine Mehrfachanordnung von Lichtschranken. Wird mit diesem Lichtgitter ein Objekt oder eine Person detektiert, wird in dem Lichtgitter eine Objektmeldung generiert, welche zum Abschalten einer Maschine oder Anlage führt. Dadurch erfüllt das Lichtgitter seine Sicherheitsfunktion, da mit diesem erfasst wird, wenn sich eine Person in den Gefahrenbereich begibt, was zu einer Gefährdung der Person führen würde, wenn dann die Maschine oder Anlage eingeschaltet bliebe. Jedoch würde auch ein Eindringen eines mit der Maschine oder Anlage zu bearbeitenden Werkstücks in den Gefahrenbereich zu einer Objektmeldung in dem Lichtgitter führen, welche dann ein Abschalten der Maschine zur Folge hätte. Da es sich bei dem zu bearbeitenden Werkstück um ein nicht sicherheitskritisches Objekt handelt, ist ein Abschalten der Maschine oder Anlage bei dessen Detektion innerhalb des Gefahrenbereichs unnötig und daher unerwünscht.

Um ein derartiges unnötiges Abschalten der Maschine oder Anlage zu vermeiden, sind bei dem Lichtgitter der DE 299 20 715 U1 zusätzlich zu der Lichtschrankenanordnung am Eingang bzw. Ausgang des Gefahrenbereichs sogenannte Mutingsensoren vorgesehen, die eine Unterscheidung zwischen Personen oder allgemein sicherheitskritischen Objekten und zulässigen Gegenständen als nicht sicherheitskritischen Objekten ermöglichen. Wird ein zulässiger Gegenstand detektiert, so erzeugen die Mutingsensoren ein Mutingsignal, d.h. ein Überbrückungssignal das bewirkt, dass trotz einer Unterbrechung der Lichtschranken des Lichtgitters die Abschaltfunktion vorübergehend deaktiviert ist, d.h. die Maschine oder Anlage nicht abgeschaltet wird. Wird hingegen eine der Lichtschranken unterbrochen und erzeugen die Mutingsensoren kein Überbrückungssignal, so wird die zu überwachende Maschine oder Anlage abgeschaltet.

Aus der DE 10 2009 048 111 B4 ist ein Sicherheitssensor bekannt, der zur Gefahrenbereichsüberwachung einer Maschine oder Anlage dient, umfassend eine Sensoreinheit mit wenigstens einem Lichtstrahlen emittierenden Sender und einem Lichtstrahlen empfangenden Empfänger zur Überwachung eines Schutzfelds sowie eine Auswerteeinheit, in welcher bei Erfassung eines Objekts im Schutzfeld als Sicherheitsfunktion ein Abschaltbefehl für die Maschine oder Anlage generiert wird. Mittels einer externen oder internen Überbrückungseinheit wird eine Gleichzeitigkeitsüberwachung von Objektvorhandensignalen durchgeführt, welche in zwei unabhängigen Signalquellen generiert werden. Eine der Signalquellen ist im Sicherheitssensor selbst integriert. In der Überbrückungseinheit wird nur ein die Sicherheitsfunktion des Sicherheitssensors überbrückendes sicheres Überbrückungssignal generiert, wenn von den Signalquellen innerhalb eines durch die Anforderungen der relevanten Sicherheits-Normvorschriften bestimmten Zeitintervalls jeweils ein Objektvorhandensignal registriert wird. Der Sicherheitssensor ist durch die Überbrückungseinheit in einen sicheren Verriegelungszustand überführt, wenn in der Überbrückungseinheit nach Registrieren des ersten Objektvorhandensignals innerhalb des Zeitintervalls das zweite Objektvorhandensignal nicht registriert wird.

Die EP 1 329 662 A2 betrifft einen Sicherheitsvorhang, der bei Eindringen eines Objekts in dessen Überwachungsbereich eine Sicherheitsfunktion auslöst. Damit nichtsicherheitskritische Objekte bei Passieren des Überwachungsbereichs nicht zur Auslösung der Sicherheitsfunktion führen, ist eine Mutingfunktion vorgesehen. Die Mutingfunktion überwacht, ob ein dem Sicherheitslichtvorhang vorgeordneter Muting-Lichtvorhang innerhalb eines vorgegebenen Zeitintervalls Objektmeldungen generiert. Ist dies der Fall wird der Sicherheitslichtvorhang gemutet.

Die EP 2 306 063 A2 betrifft einen Sicherheitssensor, welcher zur Gefahrenbereichsüberwachung einer Maschine oder Anlage dient. Der Sicherheitssensor umfasst eine Sensoreinheit mit wenigstens einem Lichtstrahlen emittierenden Sender und einem Lichtstrahlen empfangenden Empfänger zur Überwachung eines Schutzfelds sowie eine Auswerteeinheit, in welcher bei Erfassung eines Objekts im Schutzfeld als Sicherheitsfunktion ein Abschaltbefehl für die Maschine oder Anlage generiert wird. Mittels einer externen oder internen Überbrückungseinheit wird die Sicherheitsfunktion des Sicherheitssensors überbrückt, wenn innerhalb eines Zeitintervalls von zwei unabhängigen Signalquellen jeweils ein Objektvorhandensignal registriert wird. Eine der Signalquellen ist im Sicherheitssensor selbst integriert.

Die DE 10 2007 040 692 A1 betrifft eine optoelektronische Schutzeinrichtung, die einen in wengistens einem Gehäuse integrierten Sicherheitssensor zur Überwachung eines Gefahrenbereichs sowie einen Sensorausleger, in welchem wenigstens ein Muting-Sensor integriert ist, umfasst. Mittels der Muting-Sensoren ist ein Mutingsignal generierbar, mittels dessen der Sicherheitssensor stumm geschaltet werden kann. Der Sensorausleger ist über eine Halterung an das Gehäuse so gekoppelt, dass der Sensorausleger wahlweise in eine Transportstellung und in eine Arbeitsstellung relativ zum Gehäuse einbringbar ist.

Die DE 201 03 828 U1 betrifft eine Sicherheitseinrichtung zur Überwachung eines Durchgangs, durch den sich Gegenstände in einer Richtung bewegen, mit einer den Durchgang sichernden ersten Lichtschrankenanordnung, die bei einer Auslösung Sicherheitsmittel aktiviert, mit einer in der Bewegungsrichtung der Gegenstände vor dem Durchgang angeordneten zweiten Lichtschrankenanordnung, die bei einer Auslösung die erste Lichtschrankenanordnung und/oder die Sicherheitsmittel deaktiviert, und mit einer diese Deaktivierung nach dem Passieren der zweiten Lichtschrankenanordnung durch einen Gegenstand für eine vorgebbare Zeit aufrecht erhaltenden Zeitschalteinrichtung.

Der Erfindung liegt die Aufgabe zugrunde, eine Überwachungseinrichtung mit einer erweiterten Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung umfasst eine Überwachungseinrichtung mit einem Sicherheitssensor, mittels dessen Objekte innerhalb eines Schutzfelds erfassbar sind. Wobei der Sicherheitssensor löst in einem Normalbetrieb eine Sicherheitsfunktion aus, wenn dieser einen Objekteingriff im Schutzfeld registriert. Eine Überbrückungseinheit und Erfassungsmittel, mittels derer ein sich auf den Sicherheitssensor zubewegendes Objekt nacheinander wenigstens an zwei Erfassungsstellen erfassbar ist, sind vorhanden. Wenigstens ein Bereich des Schutzfelds des Sicherheitssensor wird mit der Überbrückungseinheit nur dann überbrückt, wenn innerhalb eines vorgegebenen Zeitintervalls an den Erfassungsstellen ein Objekteingriff registriert wird, wobei bei einem Objekteingriff im überbrückten Bereich des Schutzfelds der Sicherheitssensor keine Sicherheitsfunktion auslöst. Die Überbrückungseinheit überführt den Sicherheitssensor in einen sicheren Verriegelungszustand, wenn nach einem Objekteingriff an einer ersten Erfassungsstelle innerhalb des vorgegebenen Zeitintervalls kein Objekteingriff an der zweiten Erfassungsstelle registriert wird.

Die erfindungsgemäße Überwachungseinrichtung ist für den Einsatz in sicherheitstechnischen Applikationen geeignet.

Dabei wird insbesondere mit dem Schutzfeld der Zugang zu einem Gefahrenbereich einer Anlage überwacht.

Generell wird mit dem Sicherheitssensor eine Überwachungsfunktion derart ausgeführt, dass in einem Normalbetrieb der Sicherheitssensor eine Sicherheitsfunktion auslöst, wenn dieser einen Objekteingriff im Schutzfeld registriert. Vorteilhaft kann die Sicherheitsfunktion darin bestehen, dass durch die Sicherheitsfunktion eine von Sicherheitssensoren überwachte Anlage stillgesetzt wird.

Der Begriff Anlage umfasst generell auch Maschinen oder sonstige Arbeitsmittel.

Um unnötige Anlagenstillstände zu vermeiden, weist die erfindungsgemäße Überwachungseinrichtung eine Überbrückungseinheit auf, mit der eine Gatingfunktion, d.h. eine Überbrückungsfunktion, realisiert.

Mit der Gatingfunktion wird wenigstens ein Teilbereich des Schutzfelds zeitweise überbrückt, so dass dort Objekte das Schutzfeld passieren können, ohne dass der Sicherheitssensor die Sicherheitsfunktion auslöst und damit die Anlage still setzt.

Dies kann dazu genutzt werden, nicht gefahrbringende Objekte, wie Transportgüter, durch das Schutzfeld des Sicherheitssensors der Anlage zuzuführen, ohne dass die Anlage durch den Sicherheitssensor stillgesetzt wird.

Erfindungsgemäß wird die Gatingfunktion mit einer Überbrückungseinheit durchgeführt, wobei hierzu die Überbrückungseinheit Signale von Erfassungsmitteln auswertet, die sich auf den Sicherheitssensor zubewegende Objekte an wenigstens zwei Erfassungsstellen erfasst. Die Erfassungsstellen sind vorteilhaft in Bewegungsrichtung von sich auf den Sicherheitssensor zubewegenden Objekten in Abstand hintereinander angeordnet. Generell sind die Erfassungsstellen so gewählt, dass ein sich auf den Sicherheitssensor zubewegendes Objekt mit den Erfassungsmitteln an den Erfassungsstellen sequentiell erfasst wird.

Erfindungsgemäß erfolgt mit der Überbrückungseinheit eine Gleichzeitigkeitsüberwachung derart, dass eine Gatingfunktion in Form einer Überbrückung wenigstens eines Bereichs des Schutzfelds des Sicherheitssensors nur dann ausgelöst wird, wenn innerhalb eines vorgegebenen Zeitintervalls an beiden Erfassungsstellen ein Objekteingriff registriert wird. Dasselbe gilt sinngemäß, wenn mehr als zwei Erfassungsstellen vorgesehen sind.

Dabei sind der Abstand der Erfassungsstellen zueinander und zum Sicherheitssensor, sowie die Größe des Zeitintervalls so gewählt, dass die Gatingfunktion nur dann ausgelöst wird, wenn ein nicht gefahrbringendes Objekt, wie ein Transportgut, die Erfassungsstelle passiert.

Vorteilhaft werden mittels des Erfassungsmittels zulässige Objekte von unzulässigen Objekten unterschieden, d.h. anhand der Signale des Erfassungsmittels ist eine Objektklassifikation möglich. Zulässige Objekte sind dabei von nicht gefahrbringenden Objekten, wie Transportgütern, gebildet. Nicht zulässige Objekte können insbesondere Personen sein.

Gemäß einer ersten Variante der Erfindung sind als Erfassungsmittel Sensormittel vorgesehen, mittels derer Objekteingriffe an beiden Erfassungsstellen erfassbar sind.

Dabei reicht im einfachsten Fall bereits ein Sensormittel aus, um Objekte an beiden Erfassungsstellen erfassen zu können.

Bei dieser Variante liegt vorteilhaft die dem Sicherheitssensor zugeordnete zweite Erfassungsstelle in einem Abstand zum Sicherheitssensor, der kleiner als ein vorgegebener Mindestabstand ist. Damit ist sichergestellt, dass es sich bei dem Objekt, das den Sicherheitssensor passiert, um das Objekt handelt, dass zuvor mit den Sensormitteln an den beiden Erfassungsstellen detektiert wurde.

Gemäß einer zweiten Variante der Erfindung sind als erstes Erfassungsmittel Sensormittel vorgesehen, mittels derer Objekteingriffe an einer ersten Erfassungsstelle erfassbar sind. Der Sicherheitssensor bildet ein zweites Erfassungsmittel, mittels dessen Objekteingriffe an einer zweiten Erfassungsstelle, nämlich dem Ort des Sicherheitssensors, erfassbar sind.

In diesem Fall fällt also die zweite Erfassungsstelle mit der Position des Sicherheitssensors zusammen. Damit erfolgt die Erkennung eines zulässigen Objekts unmittelbar mit dessen Einheit in das Schutzfeld.

Erfindungsgemäß überführt die Überbrückungseinheit den Sicherheitssensor in einen sicheren Verriegelungszustand, wenn nach einem Objekteingriff an einer ersten Erfassungsstelle innerhalb des vorgegebenen Zeitintervalls kein Objekteingriff an der zweiten Erfassungsstelle registriert wird.

Durch den Übergang des Sicherheitssensors in den sicheren Verriegelungszustand wird eine mit dem Sicherheitssensor überwachte Anlage unmittelbar in einen sicheren Zustand überführt, vorzugsweise stillgesetzt.

Dies unterscheidet die erfindungsgemäße Überwachungseinrichtung von Systemen, die mit Mutingsensoren arbeiten. Wird anhand der Mutingsensoren keine gültige Mutingbedingung festgestellt, arbeitet der Sicherheitssensor in seinem Normalzustand weiter. Erst wenn der Sicherheitssensor einen Objekteingriff in seinem Schutzfeld registriert, wird die Anlage stillgesetzt.

Die Erfassungsmittel unterscheiden sich von bekannten Mutingsensoren wie Lichtschranken oder auch von Signalquellen, wie sie aus der DE 10 2009 048 111 B4 bekannt sind.

Gemäß einer ersten Variante können die Sensormittel von einem Radarsystem gebildet sein.

Gemäß einer zweiten Variante können die Sensormittel von einer Anordnung von Induktionsschleifen gebildet sind.

Gemäß einer dritten Variante sind die Sensormittel von Positionssensoren eines Fahrzeugs gebildet.

Das Fahrzeug kann z.B. von einem FTS (Fahrerloses Transport-System) gebildet sein, wo als Erfassungsmittel ein Navigationssystem vorgesehen sein kann.

Vorteilhaft generieren die Sensormittel nicht fehlersichere Signale.

Dies bedeutet, dass die Sensormittel keinen fehlersicheren Aufbau aufweisen müssen.

Die für den Einsatz im Bereich der Sicherheitstechnik erforderliche Fehlersicherheit der Überwachungseinrichtung wird einerseits dadurch erreicht, dass der Sicherheitssensor einen fehlersicheren Aufbau aufweist.

Dabei ist vorteilhaft, dass der fehlersichere Aufbau des Sicherheitssensors durch eine redundante Auswerteeinheit realisiert ist.

Andererseits wird die Fehlersicherheit der Überwachungseinrichtung dadurch realisiert, dass die Überbrückungseinheit einen fehlersicheren Aufbau aufweist.

Dies kann insbesondere dadurch erreicht werden, dass die Überbrückungseinheit von der Auswerteeinheit des Sicherheitssensors gebildet ist.

Mit der fehlersicheren Überbrückungseinheit und der dort durchgeführten Gleichzeitigkeitsüberwachung der Signale der Erfassungsmittel, die bei der Überwachung der Erfassungsstelle generiert werden, wird die notwendige Fehlersicherheit der Überwachungseinrichtung gewährleistet.

Gemäß einer vorteilhaften Ausführungsform ist der Sicherheitssensor ein Lichtvorhang, ein Flächendistanzsensor oder ein Kamerasensor.

Mit dem Sicherheitssensor wird somit ein flächiges oder räumliches Schutzfeld überwacht.

Generell ist es möglich, mit der Überwachungseinheit nicht nur einen Teilbereich des Schutzfelds, sondern das gesamte Schutzfeld zu überbrücken.

Weiterhin ist es möglich, dass mit der Überbrückungseinheit mehrere Teilbereiche des Schutzfelds des Sicherheitssensors überbrückt werden.

Damit ist es möglich, dass in den verschiedenen überbrückten Teilbereichen mehrere zulässige Objekte, insbesondere zeitgleich, das Schutzfeld des Sicherheitssensors passieren können, ohne dass der Sicherheitssensor eine Sicherheitsfunktion auslöst. Bei einem Sicherheitssensor in Form eines Flächendistanzsensors oder Kamerasensors können nebeneinanderliegende Teilbereiche des Schutzfelds überbrückt werden, so dass mehrere nebeneinander angeordnete zulässige Objekte auf einer Förderstrecke oder dergleichen den Sicherheitssensor passieren können, ohne dass dieser eine Sicherheitsfunktion auslöst.

Gemäß einer vorteilhaften Ausführungsform wird die Überbrückung des Sicherheitssensors für eine vorgegebene Zeitdauer aufrechterhalten.

Diese Zeitdauer ist an die Geschwindigkeit eines zulässigen Objekts so angepasst, dass die Überbrückung für die Zeit, die das zulässige Objekt benötigt, um den Sicherheitssensor zu passieren, aufrechterhalten wird.

Weiter vorteilhaft kann die Überbrückung beendet werden, wenn mit dem Sicherheitsschalter kein Objekt im Schutzfeld erkannt wird.

Dann wird die Überbrückung unmittelbar nachdem das zulässige Objekt den Sicherheitssensor passiert hat beendet.

Die Erfindung wird im Folgenden anhand der Zeichnungen erläutert. Es zeigen:
- Figur 1:: Ausführungsbeispiel eines Sicherheitssensors in Form eines Lichtvorhangs.
- Figur 2:: Ausführungsbeispiel eines Sicherheitssensors in Form eines Flächendistanzsensors.
- Figur 3:: Ausführungsbeispiel eines Sicherheitssensors in Form eines Kamerasensors.
- Figur 4:: Erstes Ausführungsbeispiel der erfindungsgemäßen Überwachungseinrichtung.
- Figur 5:: Zweites Ausführungsbeispiel der erfindungsgemäßen Überwachungseinrichtung.
- Figur 6:: Drittes Ausführungsbeispiel der erfindungsgemäßen Überwachungseinrichtung.

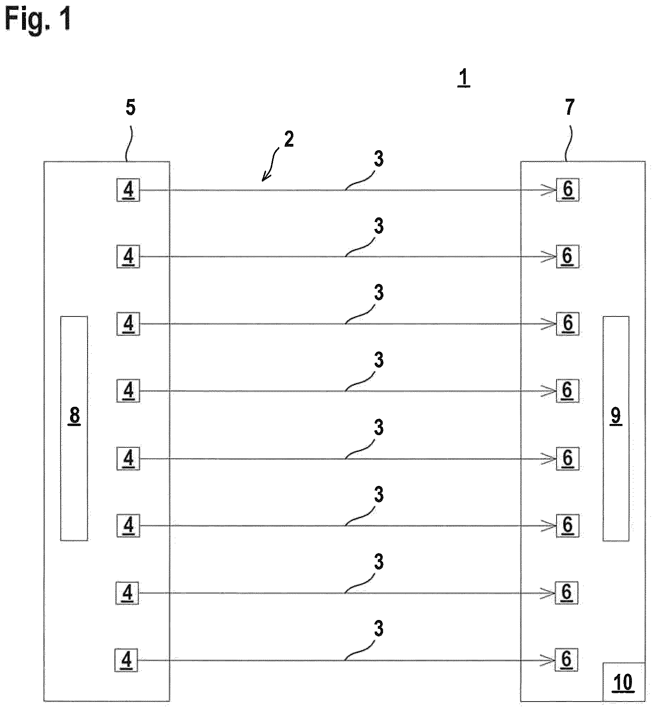

Figur 1 zeigt ein erstes Ausführungsbeispiel eines Sicherheitssensors in Form eines Lichtvorhangs 1, mittels dessen ein flächiges Schutzfeld 2 überwacht wird.

Der Lichtvorhang 1 umfasst eine Anordnung von Lichtstrahlen 3 emittierenden Sendern 4, die mit einer nicht dargestellten Steuereinheit zyklisch einzeln nacheinander aktiviert werden. Die Sender 4 und die Steuereinheit sind in einer Sendereinheit 5 mit einem ersten Gehäuse integriert. Der Lichtvorhang 1 umfasst weiter eine Anordnung von Empfängern 6 zum Empfangen der Lichtstrahlen 3. Die Empfänger 6 sind in einer Empfängereinheit 7 mit einem zweiten Gehäuse integriert. Die Sender 4 werden von einer Sendersteuerung 8 gesteuert. Den Empfängern 6 ist eine Auswerteeinheit 9 zur Steuerung des Empfängerbetriebs und zur Auswertung der an den Ausgängen der Empfänger 6 anstehenden Empfangssignale zugeordnet. Zur Erfüllung der Anforderungen für den Einsatz des Lichtvorhangs 1 im Bereich der Sicherheitstechnik weist die Auswerteeinheit 9 einen redundanten Aufbau auf. Vorzugsweise besteht die Auswerteeinheit 9 aus zwei sich zyklisch überwachenden Rechnereinheiten. Mit dem Lichtvorhang 1 wird ein Schutzfeld 2 überwacht, welches von dem Bereich zwischen den beiden Gehäusen gebildet ist. Dabei ist jedem Sender 4 jeweils ein Empfänger 6 zugeordnet, so dass bei freiem Schutzfeld 2 die vom Sender 4 emittierten Lichtstrahlen 3 auf den Empfänger 6 treffen. Jeweils ein Sender 4 und der zugeordnete Empfänger 6 definieren eine Strahlachse des Lichtvorhangs 1, wobei die Richtung der Strahlachse durch die Lichtstrahlen 3 des jeweiligen Senders 4 gegeben ist. Bei einem Objekteingriff in das Schutzfeld 2 wird der Strahlengang der Lichtstrahlen 3 wenigstens eines Senders 4, d.h. wenigstens eine Strahlachse unterbrochen.

In der Auswerteeinheit 9 wird in Abhängigkeit der Signale der Sensoreinheit ein fehlersicheres Schaltsignal generiert, dessen Schaltzustände angeben, ob sich ein Objekt im Schutzfeld 2 befindet oder nicht. Das Schaltsignal wird über einen Sicherheits-Schaltausgang 10 ausgegeben, der vorteilhaft mehrkanalig ausgebildet ist.

Bei freiem Schutzfeld 2 ist der Sicherheits-Schaltausgang 10 entsprechend dem aktuellen Schaltzustand des Schaltsignals eingeschaltet. Bei einem Objekteingriff in das Schutzfeld 2 ist der Sicherheits-Schaltausgang 10 abgeschaltet.

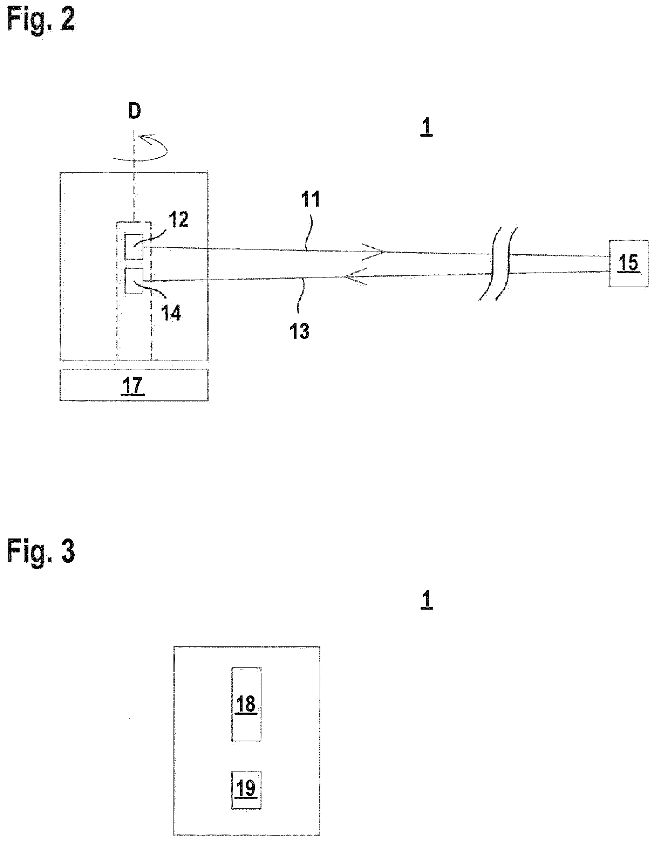

Figur 2 zeigt ein Ausführungsbeispiel eines Sicherheitssensors in Form eines Flächendistanzsensors. Der Flächendistanzsensor weist einen nach einem Impuls-Laufzeit-Verfahren arbeitenden Distanzsensor mit einem Sendelichtstrahlen 11 emittierenden Sendeelement 12 und einem Empfangslichtstrahlen 13 empfangenden Empfangselement 14 auf, wobei aus der Lichtlaufzeit zu einem Zielobjekt 15 und zurück zum Flächendistanzsensor die Distanz des Zielobjekts 15 ermittelt wird.

Das Sendeelement 12 und das Empfangselement 14 sind mittels einer Halterung in einem Messkopf 16 gelagert, dessen Mantelfläche ein Austrittsfenster für die Sendelichtstrahlen 11 und Empfangslichtstrahlen 13 ausbildet. Der Messkopf 16 ist drehbar auf einem Sockel 17 gelagert. Mittels eines nicht dargestellten Antriebs wird der Messkopf 16 in eine Drehbewegung um eine Drehachse D versetzt, wodurch die Sendelichtstrahlen 11 periodisch ein flächiges Schutzfeld 2 überstreichen.

Alternativ kann der Flächendistanzsensor derart ausgebildet sein, dass das Sendeelement 12 und Empfangselement 14 stationär in einem Gehäuse angeordnet sind. Die Sendelichtstrahlen 11 werden dann über eine motorisch getriebene Ablenkeinheit periodisch abgelenkt.

Figur 3 zeigt ein Ausführungsbeispiel eines Sicherheitssensors in Form eines Kamerasensors, der einen Bildsensor 18 und eine Beleuchtungseinheit 19 aufweist. Der Bildsensor 18 kann eine Linear- oder Matrixanordnung von Pixeln aufweisen. Beispielsweise kann der Bildsensor 18 von einem CCD- oder CMOS-Array gebildet sein.

Entsprechend der Ausführungsform gemäß Figur 1 weisen auch die Sicherheitssensoren gemäß den Figuren 2 und 3 eine Auswerteeinheit 9 und einen Sicherheits-Schaltausgang 10 auf.

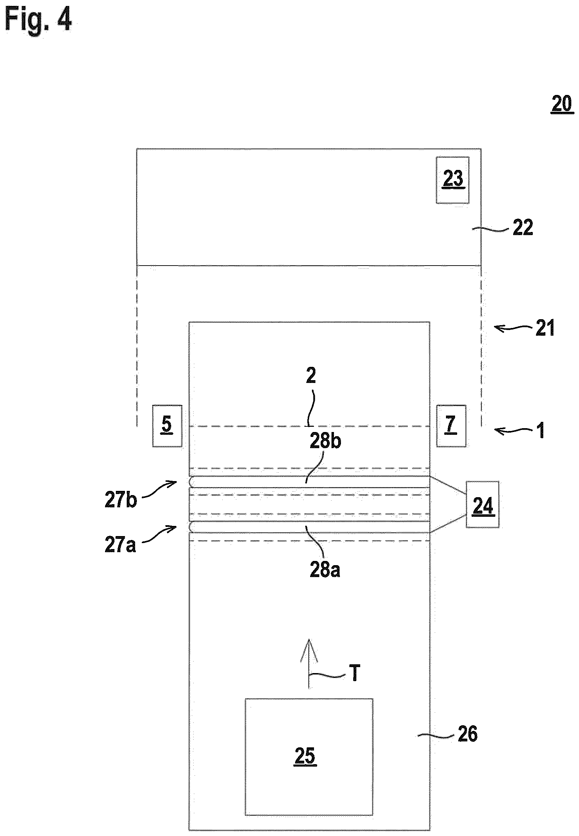

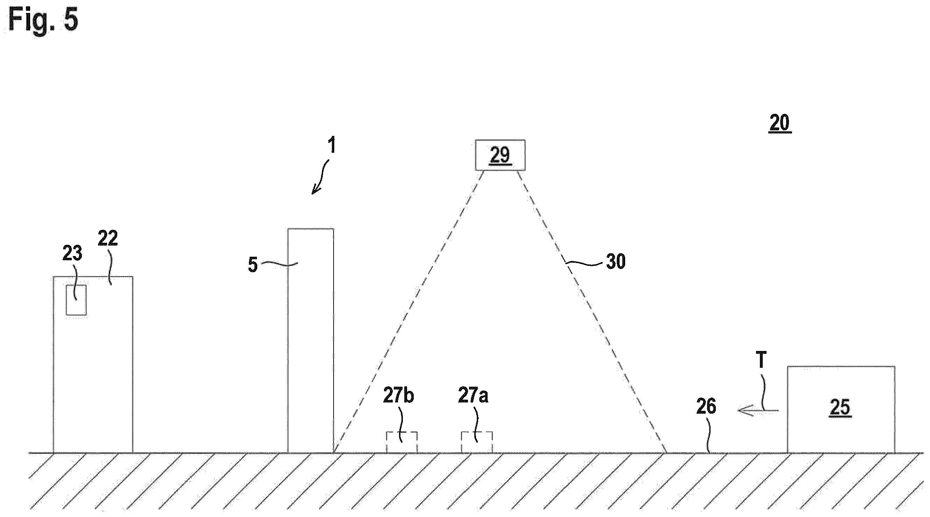

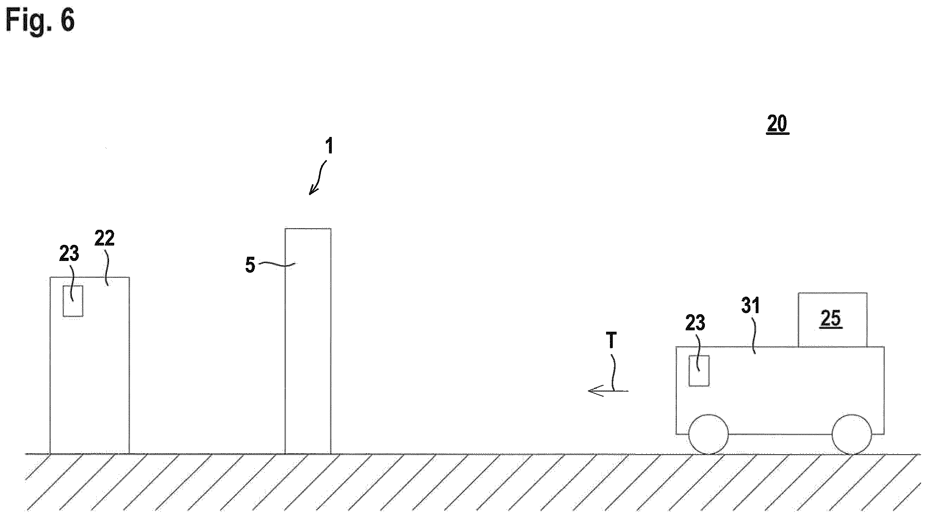

Figur 4 zeigt ein erstes Ausführungsbeispiel der erfindungsgemäßen Überwachungseinrichtung 20 mit einem Sicherheitssensor in Form eines Lichtvorhangs 1. Anstelle des Lichtvorhangs 1 kann auch ein Flächendistanzsensor oder Kamerasensor eingesetzt werden. Dies gilt auch für die Ausführungsformen der Figuren 5 und 6.

Mit dem Lichtvorhang 1 wird der Zugang zu einem Gefahrenbereich 21 einer Anlage 22 überwacht. Die Anlage 22 wird von einer Anlagensteuerung 23 gesteuert. Der Sicherheits-Schaltausgang 10 des Lichtvorhangs 1 ist mit der Anlagensteuerung 23 verbunden.

Im Normalbetrieb des Lichtvorhangs 1 überwacht dieser das gesamte Schutzfeld 2. Bei freiem Schutzfeld 2 generiert der Lichtvorhang 1 ein entsprechendes Schaltsignal, durch welches der Sicherheits-Schaltausgang 10 eingeschaltet wird, wodurch der Betrieb der Anlage 22 freigegeben ist. Bei einem Objekteingriff im Schutzfeld 2 generiert der Lichtvorhang 1 ein Schaltsignal, durch welches der Sicherheits-Schaltausgang 10 abgeschaltet wird. Dadurch wird eine Sicherheitsfunktion derart ausgelöst, dass die Anlage 22 stillgesetzt wird.

Um nicht gefahrbringende, zulässige Objekte durch das Schutzfeld 2 der Anlage 22 zu führen können ohne dass der Lichtvorhang 1 eine Sicherheitsfunktion auslöst und die Anlage 22 stillgesetzt wird, ist eine Überbrückungseinheit 24 vorgesehen, mittels derer das Schutzfeld 2 des Lichtvorhangs 1 zeitweise zumindest partiell überbrückt wird.

Die Überbrückungseinheit 24 bildet eine fehlersichere Einheit, die vorzugsweise zwei sich gegenseitig überwachende Rechnereinheiten aufweist. Die Überbrückungseinheit 24 bildet im vorliegenden Fall eine separate Einheit. Alternativ kann die Überbrückungseinheit 24 in der Auswerteeinheit 9 des Lichtvorhangs 1 integriert sein.

Wie Figur 4 zeigt, wird ein Transportgut 25 als zulässiges Objekt auf einer Förderstrecke 26 in einer Transportvorrichtung T in Richtung des Sicherheitssensors bewegt, um so das Transportgut 25 der Anlage 22 zuzuführen.

An der Förderstrecke 26 sind an zwei Erfassungsstellen 27a, 27b Induktionsschleifen 28a, 28b vorgesehen, die sich über die gesamte Breite der Förderstrecke 26 erstrecken. Die Erfassungsstellen 27a, 27b mit den Induktionsschleifen 28a, 28b sind in Transportrichtung T hintereinander angeordnet.

Die Induktionsschleifen 28a, 28b bilden nicht fehlersichere Sensormittel zur Erfassung des Transportguts 25 und sind an die Überbrückungseinheit 24 angeschlossen. Um das Transportgut 25 sicher von nicht zulässigen Objekten, wie Personen, zu unterscheiden, sind die Abstände zwischen der ersten Erfassungsstelle 27a und der zweiten Erfassungsstelle 27b und zum Lichtvorhang 1 entsprechend angepasst. Zudem werden mit den Induktionsschleifen 28a, 28b nur metallische Körper, wie der Untergrund des Transportguts 25, erfasst. Auch dadurch ist eine Unterscheidung zwischen zulässigen und nicht zulässigen Objekten möglich.

In der Überbrückungseinheit 24 wird das sich dem Sicherheitssensor nähernde Transportgut 25 dadurch erkannt, dass zunächst die erste Induktionsschleife 28a einen Objekteingriff durch das Transportgut 25 registriert und darauf innerhalb eines in der Überbrückungseinheit 24 vorgegebenen Zeitintervalls, das z.B. 4 sec beträgt, auch die zweite Induktionsschleife 28b einen Objekteingriff registriert.

Ist diese Bedingung erfüllt, wird zumindest ein Teilbereich des Schutzfelds 2 des Lichtvorhangs 1 durch einen Befehl der Überbrückungseinheit 24 überbrückt, so dass ein dort erfolgter Objekteingriff nicht zur Auslösung der Sicherheitsfunktion führt. Der überbrückte Teilbereich ist an die Abmessungen des Transportguts 25 angepasst, so dass das Transportgut 25 das Schutzfeld 2 passieren kann, ohne dass die Sicherheitsfunktion ausgelöst wird.

Vorteilhaft wird die Überbrückung des Sicherheitssensors für eine vorgegebene Zeitdauer aufrechterhalten.

Die Zeitdauer ist an die Zeitdauer angepasst, die das Transportgut 25 benötigt, um das Schutzfeld 2 zu passieren.

Gemäß einer vorteilhaften Weiterbildung wird die Überbrückung beendet, wenn mit dem Sicherheitsschalter kein Objekt im Schutzfeld 2 erkannt wird.

Vorteilhaft überführt die Überbrückungseinheit 24 den Sicherheitssensor in einen sicheren Verriegelungszustand, wenn nach einem Objekteingriff an einer ersten Erfassungsstelle 27a innerhalb des vorgegebenen Zeitintervalls kein Objekteingriff an der zweiten Erfassungsstelle 27b registriert wird.

Der sichere Verriegelungszustand wird durch ein Abschalten des Sicherheits-Schaltausgangs 10 des Lichtvorhangs 1 realisiert, wodurch die Anlage 22 sofort stillgesetzt wird.

Die Ausführungsform der Figur 4 kann dahingehend abgewandelt sein, dass nur eine Induktionsschleife 28b als Sensormittel vorgesehen ist. Dann bildet der Lichtvorhang 1 neben der Induktionsschleife 28b ein weiteres Erfassungsmittel, mittels dessen ein Transportgut 25 oder allgemein ein zulässiges Objekt dann als erkannt gilt, wenn zunächst in der Induktionsschleife 28b ein Obj ekteingriff registriert wird und darauffolgend innerhalb des vorgegebenen Zeitintervalls mit dem Lichtvorhang 1 ein Objekteingriff registriert wird. Nur wenn diese Bedingung erfüllt ist, erfolgt eine Überbrückung des Lichtvorhangs 1.

Wird nach einer Objekterkennung mit der Induktionsschleife 28b innerhalb des vorgegebenen Zeitintervalls mit dem Lichtvorhang 1 kein Objekteingriff registriert, wird der Lichtvorhang 1 in den sicheren Verriegelungszustand überführt.

Figur 5 zeigt eine Variante der Ausführungsform gemäß Figur 4. Anstelle von Induktionsschleifen 28a, 28b ist als Sensormittel ein Radarsystem 29 oberhalb der Förderstrecke 26 angeordnet, mit dem Objekte innerhalb eines Erfassungsbereichs 30 erfasst werden.

Innerhalb des Erfassungsbereichs 30 sind zwei Erfassungsstellen 27a, 27b definiert, an welchen Objekteingriffe registriert werden.

Anstelle zweier Erfassungsstellen 27a, 27b kann auch nur eine Erfassungsstelle 27b vorgesehen sein, wobei dann analog zur Ausführungsform gemäß Figur 4 neben dem Radarsystem 29 als Sensormittel und erstes Erfassungsmittel der Lichtvorhang 1 als zweites Erfassungsmittel genutzt wird.

Die Funktionsweise der Überwachungseinrichtung 20 gemäß Figur 5 entspricht der Funktionsweise der Überwachungseinrichtung 20 gemäß Figur 4.

Figur 6 zeigt ein weiteres Ausführungsbeispiel der erfindungsgemäßen Überwachungseinrichtung 20. In diesem Fall transportiert ein fahrerloses Transportsystem 31 Transportgut 25 durch das Schutzfeld 2 zur Anlage 22. Im fahrerloses Transportsystem 31 ist ein Navigationssystem 32 vorgesehen, das Positionssignale generiert. Anhand der Positionssignale kann die Überbrückungseinheit 24 eine Überbrückung des Lichtvorhangs 1 auslösen, wobei die Funktionsweise hierbei den Ausführungsformen der Figuren 4 und 5 entspricht.

### Bezugszeichenliste

- (1): Lichtvorhang
- (2): Schutzfeld
- (3): Lichtstrahl
- (4): Sender
- (5): Sendereinheit
- (6): Empfänger
- (7): Empfängereinheit
- (8): Sendersteuerung
- (9): Auswerteeinheit
- (10): Sicherheits-Schaltausgang
- (11): Sendelichtstrahl
- (12): Sendeelement
- (13): Empfangslichtstrahl
- (14): Empfangselement
- (15): Zielobjekt
- (16): Messkopf
- (17): Sockel
- (18): Bildsensor
- (19): Beleuchtungseinheit
- (20): Überwachungseinrichtung
- (21): Gefahrenbereich
- (22): Anlage
- (23): Anlagensteuerung
- (24): Überbrückungseinheit
- (25): Transportgut
- (26): Förderstrecke
- (27a, b): Erfassungsstelle
- (28a, b): Induktionsschleife
- (29): Radarsystem
- (30): Erfassungsbereich
- (31): fahrerloses Transportsystem
- (32): Navigationssystem

- (D): Drehachse
- (T): Transportrichtung

## Patentansprüche

1. Überwachungseinrichtung (20) mit einem Sicherheitssensor, mittels dessen Objekte innerhalb eines Schutzfelds (2) erfassbar sind, wobei der Sicherheitssensor in einem Normalbetrieb eine Sicherheitsfunktion auslöst, wenn dieser einen Objekteingriff im Schutzfeld (2) registriert, wobei eine Überbrückungseinheit (24) und Erfassungsmittel, mittels derer ein sich auf den Sicherheitssensor zubewegendes Objekt nacheinander wenigstens an zwei Erfassungsstellen (27a, 27b) erfassbar ist, vorhanden sind, und wobei wenigstens ein Bereich des Schutzfelds (2) des Sicherheitssensors mit der Überbrückungseinheit (24) nur dann überbrückt, wenn innerhalb eines vorgegebenen Zeitintervalls an den Erfassungsstellen (27a, 27b) ein Objekteingriff registriert wird, wobei bei einem Objekteingriff im überbrückten Bereich des Schutzfelds (2) der Sicherheitssensor keine Sicherheitsfunktion auslöst, **dadurch gekennzeichnet, dass** die Überbrückungseinheit (24) den Sicherheitssensor in einen sicheren Verriegelungszustand überführt, wenn nach einem Objekteingriff an einer ersten Erfassungsstelle (27a) innerhalb des vorgegebenen Zeitintervalls kein Objekteingriff an der zweiten Erfassungsstelle (27b) registriert wird.

2. Überwachungseinrichtung (20) nach einem der Ansprüche 1 oder 2 nach Anspruch 1, **dadurch gekennzeichnet, dass** als Erfassungsmittel Sensormittel vorgesehen sind, mittels derer Objekteingriffe an beiden Erfassungsstellen (27a, 27b) erfassbar sind, oder dass als erstes Erfassungsmittel Sensormittel vorgesehen sind, mittels derer Objekteingriffe an einer ersten Erfassungsstelle (27a) erfassbar sind, und dass der Sicherheitssensor ein zweites Erfassungsmittel bildet, mittels dessen Objekteingriffe an einer zweiten Erfassungsstelle (27b) erfassbar sind.

3. Überwachungseinrichtung (20) nach Anspruch 2, **dadurch gekennzeichnet, dass** die Sensormittel von einem Radarsystem (29) oder von einer Anordnung von Induktionsschleifen (28a, 28b) oder von Positionssensoren eines Fahrzeugs gebildet sind.

4. Überwachungseinrichtung (20) nach einem der Ansprüche 2 oder 3, **dadurch gekennzeichnet, dass** die Sensormittel nicht fehlersichere Signale generieren.

5. Überwachungseinrichtung (20) nach einem der Ansprüche 1 bis 4, **dadurch gekennzeichnet, dass** der Sicherheitssensor einen fehlersicheren Aufbau aufweist.

6. Überwachungseinrichtung (20) nach Anspruch 5, **dadurch gekennzeichnet, dass** der fehlersichere Aufbau des Sicherheitssensors durch eine redundante Auswerteeinheit (9) realisiert ist.

7. Überwachungseinrichtung (20) nach einem der Ansprüche 1 bis 6, **dadurch gekennzeichnet, dass** der Sicherheitssensor ein Lichtvorhang (1), ein Flächendistanzsensor oder ein Kamerasensor ist.

8. Überwachungseinrichtung (20) nach einem der Ansprüche 1 bis 7, **dadurch gekennzeichnet, dass** die Überbrückungseinheit (24) einen fehlersicheren Aufbau aufweist.

9. Überwachungseinrichtung (20) nach einem der Ansprüche 6 und 8, **dadurch gekennzeichnet, dass** die Überbrückungseinheit (24) von der Auswerteeinheit (9) des Sicherheitssensors gebildet ist.

10. Überwachungseinrichtung (20) nach einem der Ansprüche 1 bis 9, **dadurch gekennzeichnet, dass** mit der Überbrückungseinheit (24) das gesamte Schutzfeld (2) des Sicherheitssensors überbrückt wird, oder dass mit der Überbrückungseinheit (24) mehrere Teilbereiche des Schutzfelds (2) des Sicherheitssensors überbrückt werden.

11. Überwachungseinrichtung (20) nach einem der Ansprüche 1 bis 10, **dadurch gekennzeichnet, dass** die Überbrückung des Sicherheitssensors für eine vorgegebene Zeitdauer aufrechterhalten wird.

12. Überwachungseinrichtung (20) nach Anspruch 11, **dadurch gekennzeichnet, dass** die Überbrückung beendet wird, wenn mit dem Sicherheitsschalter kein Objekt im Schutzfeld (2) erkannt wird.

13. Überwachungseinrichtung (20) nach einem der Ansprüche 1 bis 12, **dadurch gekennzeichnet, dass** mit dem Schutzfeld (2) der Zugang zu einem Gefahrenbereich (21) einer Anlage (22) überwacht wird.

14. Überwachungseinrichtung (20) nach Anspruch 13, **dadurch gekennzeichnet, dass** zulässige Objekte entlang einer Förderstrecke (26) durch das Schutzfeld (2) des Sicherheitssensors in den Gefahrenbereich (21) geführt sind, wobei mittels des Erfassungsmittels zulässige Objekte von unzulässigen Objekten unterschieden werden.

## Claims

1. A monitoring device (20) with a safety sensor, by means of which objects can be detected within a protective field (2), wherein the safety sensor triggers a safety function in normal operation when it registers an object intrusion in the protective field (2), wherein a bridging unit (24) and detection means, by means of which an object moving towards the safety sensor can be detected successively at at least two detection points (27a, 27b), are present, and wherein at least one region of the protective field (2) is provided, by means of which an object moving towards the safety sensor can be detected successively at at least two detection points (27a, 27b), and wherein at least one region of the protective field (2) of the safety sensor is bridged by the bridging unit (24) only if the object is detected within a predetermined time interval, if an object intrusion is registered at the detection points (27a, 27b) within a predetermined time interval, the safety sensor not triggering a safety function in the event of an object intrusion in the bridged area of the protective field (2), **characterised in that** the bridging unit (24) transfers the safety sensor into a safe locking state if, after an object intrusion at a first detection point (27a), no object intrusion is registered at the second detection point (27b) within the predetermined time interval.

2. A monitoring device (20) according to claim 1, **characterised in that** sensor means are provided as detection means, by means of which object interventions can be detected at both detection points (27a, 27b), or **in that** sensor means are provided as first detection means, by means of which object interventions can be detected at a first detection point (27a), and **in that** the safety sensor forms a second detection means, by means of which object interventions can be detected at a second detection point (27b).

3. A monitoring device (20) according to claim 2, **characterised in that** the sensor means are formed by a radar system (29) or by an arrangement of induction loops (28a, 28b) or by position sensors of a vehicle.

4. A monitoring device (20) according to one of claims 2 or 3, **characterised in that** the sensor means do not generate fail-safe signals.

5. A monitoring device (20) according to one of claims 1 to 4, **characterised in that** the safety sensor has a fail-safe design.

6. A monitoring device (20) according to claim 5, **characterised in that** the fail-safe design of the safety sensor is implemented by a redundant evaluation unit (9).

7. A monitoring device (20) according to one of claims 1 to 6, **characterised in that** the safety sensor is a light curtain (1), an area distance sensor or a camera sensor.

8. A monitoring device (20) according to one of claims 1 to 7, **characterised in that** the bridging unit (24) has a fail-safe structure.

9. A monitoring device (20) according to one of claims 6 and 8, **characterised in that** the bridging unit (24) is formed by the evaluation unit (9) of the safety sensor.

10. A monitoring device (20) according to one of claims 1 to 9, **characterised in that** the entire protective field (2) of the safety sensor is bypassed with the bypass unit (24), or **in that** several partial areas of the protective field (2) of the safety sensor are bypassed with the bypass unit (24).

11. A monitoring device (20) according to one of claims 1 to 10, **characterised in that** the bridging of the safety sensor is maintained for a predetermined period of time.

12. A monitoring device (20) according to claim 11, **characterised in that** the bridging is terminated if no object is detected in the protective field (2) by the safety switch.

13. A monitoring device (20) according to one of claims 1 to 12, **characterised in that** the protective field (2) is used to monitor access to a danger zone (21) of an installation (22).

14. A monitoring device (20) according to claim 13, **characterised in that** permissible objects are guided along a conveying path (26) through the protective field (2) of the safety sensor into the danger zone (21), permissible objects being distinguished from impermissible objects by means of the detection means.

## Revendications

1. Dispositif de surveillance (20) avec un capteur de sécurité permettant de détecter des objets dans un champ de protection (2), dans lequel le capteur de sécurité déclenche une fonction de sécurité en fonctionnement normal lorsqu'il enregistre l'intrusion d'un objet dans le champ de protection (2), dans lequel une unité de pontage (24) et des moyens de détection, au moyen desquels un objet se déplaçant vers le capteur de sécurité peut être détecté successivement à au moins deux points de détection (27a, 27b), sont présents, au moyen desquels un objet se déplaçant vers le capteur de sécurité peut être détecté successivement à au moins deux points de détection (27a, 27b), et dans lequel au moins une zone du champ de protection (2) est prévue, au moyen de laquelle un objet se déplaçant vers le capteur de sécurité peut être détecté successivement à au moins deux points de détection (27a, 27b), et dans lequel au moins une zone du champ de protection (2) du capteur de sécurité est franchie par l'unité de pontage (24) uniquement si l'objet est détecté dans un intervalle de temps prédéterminé, si une intrusion d'objet est enregistrée aux points de détection (27a, 27b) dans un intervalle de temps prédéterminé, le capteur de sécurité ne déclenche pas de fonction de sécurité en cas d'intrusion d'un objet dans la zone pontée du champ de protection (2), **caractérisé par le fait que** l'unité de pontage (24) transfère le capteur de sécurité dans un état de verrouillage sûr si, après une intrusion d'objet à un premier point de détection (27a), aucune intrusion d'objet n'est enregistrée au second point de détection (27b) dans l'intervalle de temps prédéterminé.

2. Dispositif de surveillance (20) selon la revendication 1, **caractérisé par le fait que** les capteurs sont des moyens de détection permettant de détecter les interventions des objets aux deux points de détection (27a, 27b), ou **par le fait que** les capteurs sont des premiers moyens de détection permettant de détecter les interventions des objets à un premier point de détection (27a), et que le capteur de sécurité constitue un deuxième moyen de détection permettant de détecter les interventions des objets à un deuxième point de détection (27b).

3. Dispositif de surveillance (20) selon la revendication 2, **caractérisé par le fait que** les moyens de détection sont constitués par un système radar (29) ou par un arrangement de boucles d'induction (28a, 28b) ou par des capteurs de position d'un véhicule.

4. Dispositif de surveillance (20) selon l'une des revendications 2 ou 3, **caractérisé par le fait que** les moyens de détection ne génèrent pas de signaux de sécurité.

5. Dispositif de surveillance (20) selon l'une des revendications 1 à 4, **caractérisé par le fait que** le capteur de sécurité a une conception à sécurité intégrée.

6. Dispositif de surveillance (20) selon la revendication 5, **caractérisé par le fait que** la conception à sécurité intégrée du capteur de sécurité est mise en oeuvre par une unité d'évaluation redondante (9).

7. Dispositif de surveillance (20) selon l'une des revendications 1 à 6, **caractérisé par le fait que** le capteur de sécurité est un rideau lumineux (1), un capteur de distance ou un capteur de caméra.

8. Dispositif de surveillance (20) selon l'une des revendications 1 à 7, **caractérisé par le fait que** l'unité de pontage (24) a une structure à sécurité intégrée.

9. Dispositif de surveillance (20) selon l'une des revendications 6 et 8, **caractérisé par le fait que** l'unité de pontage (24) est formée par l'unité d'évaluation (9) du capteur de sécurité.

10. Dispositif de surveillance (20) selon l'une des revendications 1 à 9, **caractérisé par le fait que** l'ensemble du champ de protection (2) du capteur de sécurité est contourné par l'unité de contournement (24), ou **par le fait que** plusieurs zones partielles du champ de protection (2) du capteur de sécurité sont contournées par l'unité de contournement (24).

11. Dispositif de surveillance (20) selon l'une des revendications 1 à 10, **caractérisé par le fait que** le pontage du capteur de sécurité est maintenu pendant une période de temps prédéterminée.

12. Dispositif de surveillance (20) selon la revendication 11, **caractérisé par le fait que** le pontage est interrompu si aucun objet n'est détecté dans le champ de protection (2) par le commutateur de sécurité.

13. Dispositif de surveillance (20) selon l'une des revendications 1 à 12, **caractérisé par le fait que** le champ de protection (2) est utilisé pour surveiller l'accès à une zone dangereuse (21) d'une installation (22).

14. Dispositif de surveillance (20) selon la revendication 13, **caractérisé par le fait que** les objets autorisés sont guidés le long d'un chemin de transport (26) à travers le champ de protection (2) du capteur de sécurité vers la zone dangereuse (21), les objets autorisés étant distingués des objets non autorisés par les moyens de détection.
